# EUROPEAN PATENT SPECIFICATION

(11) **EP 1 883 305 B1**
(45) Date of publication and mention of the grant of the patent: **28.12.2011**
(21) Application number: 05754567.5
(22) Date of filing: 16.06.2005
(51) Int. Cl.: A21B 1/48

(54) **INDUSTRIAL TUNNEL TYPE WOOD BURNING OVEN FOR THE BAKING OF PIZZA AND SIMILAR ALIMENTARY PRODUCTS**
TUNNELARTIGER INDUSTRIELLER HOLZOFEN FÜR DAS BACKEN VON PIZZA UND ÄHNLICHEN NAHRUNGSMITTELPRODUKTEN
TUNNEL INDUSTRIEL DE TYPE FOUR À BOIS DESTINÉ À LA CUISSON DE PIZZAS ET DE PRODUITS ALIMENTAIRES SIMILAIRES

(30) Priority: 23.05.2005 IT MI20050934
(43) Date of publication of application: 06.02.2008
(73) Proprietor: Italpizza s.r.l., 41126 Modena (IT)
(72) Inventor: FERRO, Pietro, I-21020 BREBBIA (VA) (IT)
(74) Representative: Iannone, Carlo Luigi
(86) International application number: PCT/EP2005/052806
(87) International publication number: WO 2006/125475

(56) References cited:
- EP-A- 0 456 594
- FR-A- 2 685 607
- FR-A- 2 697 722
- US-A- 5 942 142
- US-A1- 2004 043 348

## Description

The present invention concerns an industrial tunnel type wood burning oven for the baking of pizza and similar alimentary products.

Pizza is one of the most widespread foods in the world. Not all over the world however pizza has a taste that approaches the one produced in Italy according to traditional methodologies typical of the Italian cuisine.

Classic Italian pizza houses produce pizza in wood burning ovens whose dimensions do not allow a high productivity. Bigger pizza houses have two ovens which however do not allow to bake more than 4-5 pizza pies each.

In order to produce pizza industrially gas heated tunnel type ovens are used, that are made up of a bearing structure of refractory material with a through tunnel.

A conveyor mean allows to move the pizza or similar alimentary product (for example "focaccia") from an inlet mouth to an outlet one.

Said ovens are heated by gas since the combustion of firewood is rather difficult to control in very long tunnels. An excess of smoke can cause the blackening of the pizza and the presence of incombustibles.

On the other hand gas heating does not allow to obtain good quality pizza. It is known that the most suitable ovens for baking the pizza are the ones using firewood.

Wood burning ovens are known that are made up of a revolving plate with a single inlet/outlet mouth for the pizza. Said plates can contain several pizza pies at the same time and they rotate intermittently in a single sense. The time necessary for the baking of the pizza, and therefore for the pizza to go back to the inlet/outlet mouth is calculated as a function of the baking temperature.

This last type of oven has the disadvantage to take up a lot of space. For each additional pizza that one wants to insert on the plate it is necessary to considerably increase the diameter of the latter.

By increasing the dimensions in addition there is again the inconveniency connected with the smoke which was mentioned for the tunnel type ovens.

In conclusion industrial gas heated tunnel type ovens allow a high productivity to the prejudice of the quality of pizza, whereas the ones with revolving plate (heated by firewood) allow to produce pizza pies having good quality but with limited productivity.

A wood fired tunnel type pizza over is described by the publication FR 2697722.

Object of the present invention is to provide an industrial oven for pizza or alimentary products which combines an optimum productivity with a good quality of the pizza, whose taste is at least comparable to the one made with common wood burning ovens of traditional pizza houses.

Additional object of the present invention is to provide a procedure for the baking of pizza or similar products in industrial ovens which allows the control of the temperature and the quality of the air on the baking surface.

According to the invention, such object is attained with an industrial oven with tunnel for the baking of pizza or similar alimentary products according to the object of claim 1.

According to the invention, such object is also attained with a process for the baking of pizza or similar alimentary products according to the object of claim 16.

These and other characteristics of the present invention will be made more evident from the following detailed description of an embodiment thereof which is illustrated as a non-limiting example in the enclosed drawings, in which:
Figure 1 shows a side view of an oven according to the present invention;
Figure 2 shows a magnified side view of a portion of the oven in Figure 1.
Figure 3 shows a section view according to the line III-III in Figure 2;
Figure 4 shows a section view according to the line IV-IV in Figure 2;
Figure 5 shows a section view according to the line V-V in Figure 2;
Figure 6 shows a section view according to the line VI-VI in Figure 4;
Figure 7 shows a section view according to the line VII-VII in Figure 4;
Figure 8 shows a section view according to the line VIII-VIII in Figure 4;
Figure 9 shows a section view according to the line IX-IX in Figure 6;
Figure 10 shows a section view according to the line X-X in Figure 6.

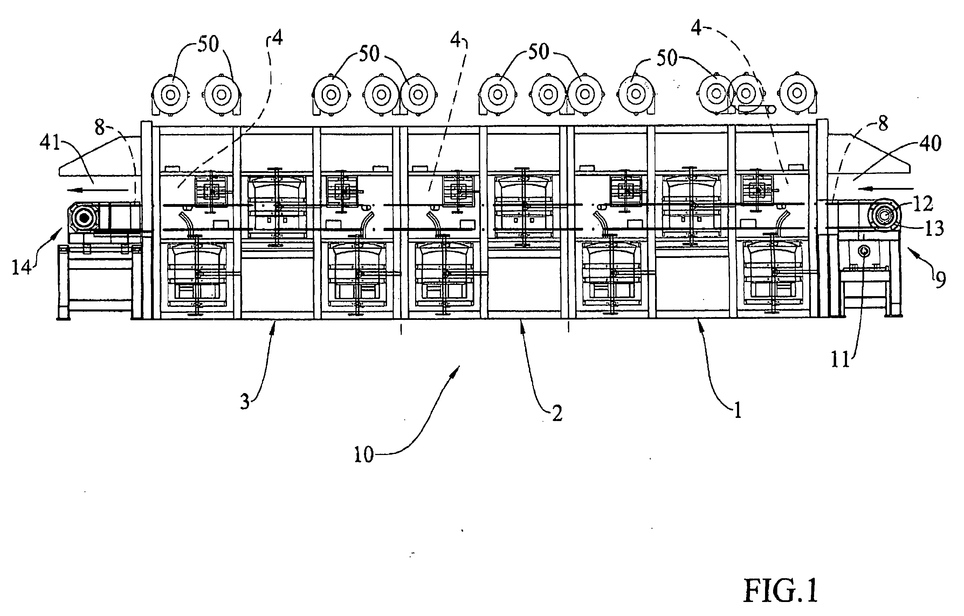

An industrial tunnel type wood burning oven according to the present invention is for example made up of a modular bearing structure 4 with through tunnel 10 comprising an inlet module 1 with inlet mouth 40, an intermediate module 2 and an outlet module 3 with outlet mouth 41, being the outlet module 3 equal to the inlet module 1 (Figure 1).

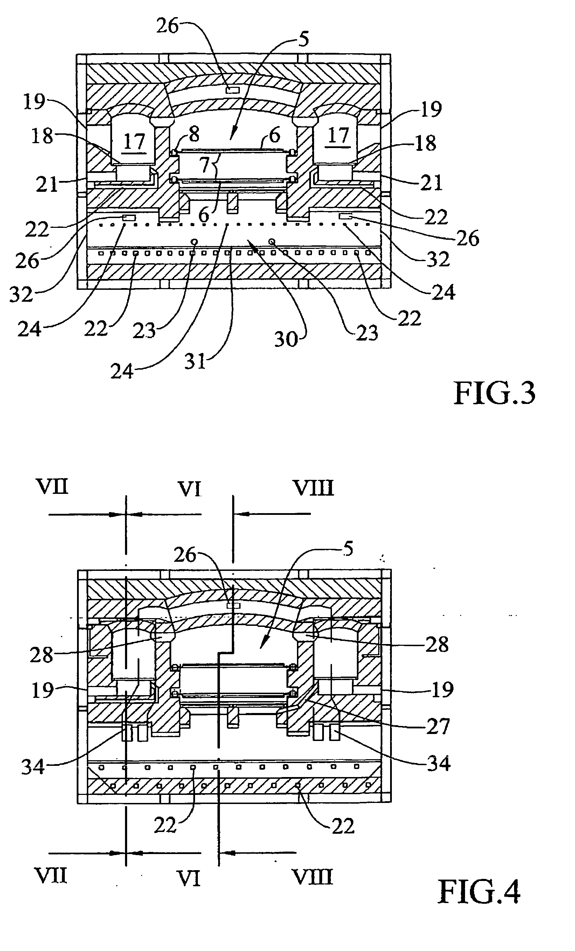

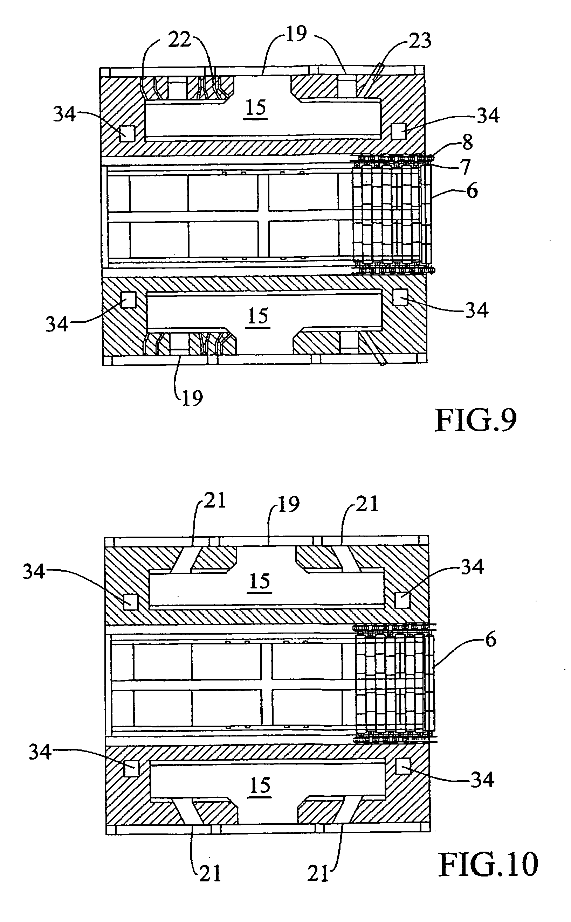

The through tunnel 4 houses a mobile baking surface 5 made of refractory plates 6 mounted on steel brackets 7 whose ends are fastened to transport chains 8 controlled by a motor unit 9 (Figures 3-5, 9-10).

Said motor unit 9, located at the inlet of the tunnel 4, consists (Figure 1) in a driving shaft 11 which through a transmission (not shown) controls a driven shaft 12 onto which a crown gear 13 is fastened which is engaged with the transport chain 8 kept in tension by a transmission unit 14 located at the outlet of the tunnel 4.

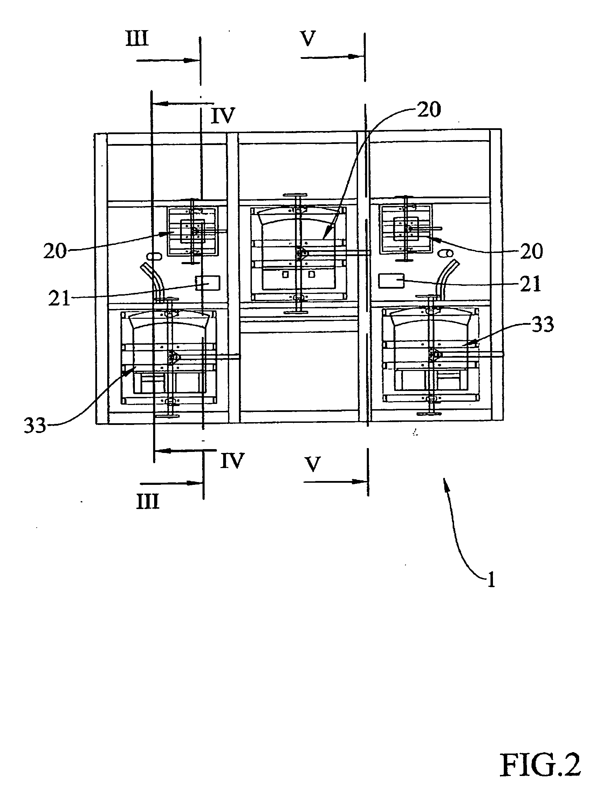

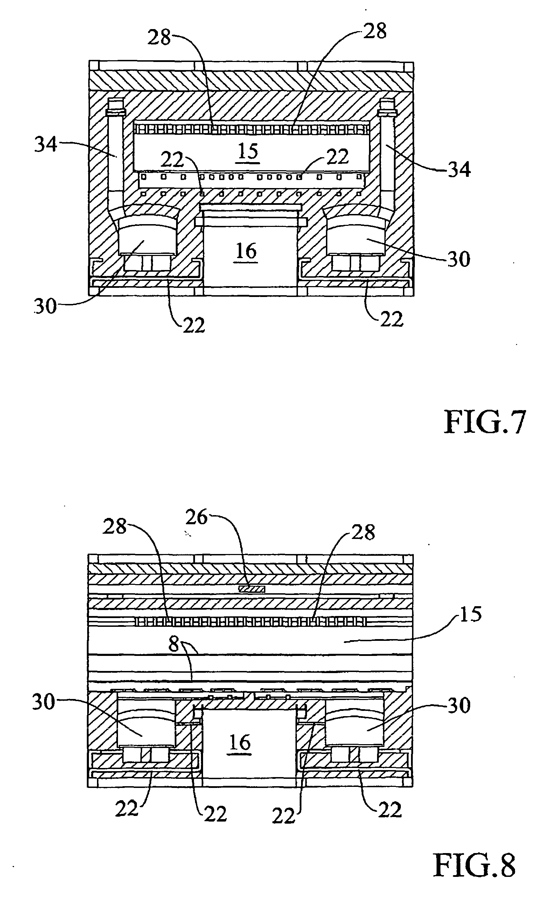

The bearing structure 10 comprises a top combustion chamber 15 and a bottom combustion chamber 16. The top combustion chamber 15 (Figures 3-10) comprises top furnaces 17 having top grates 18 onto which to lay combustible firewood (not shown) introducible through top openings 19 closed by top doors 20. Additional small openings 21 allow the partial cleaning of the top furnaces 17 (Figure 2).

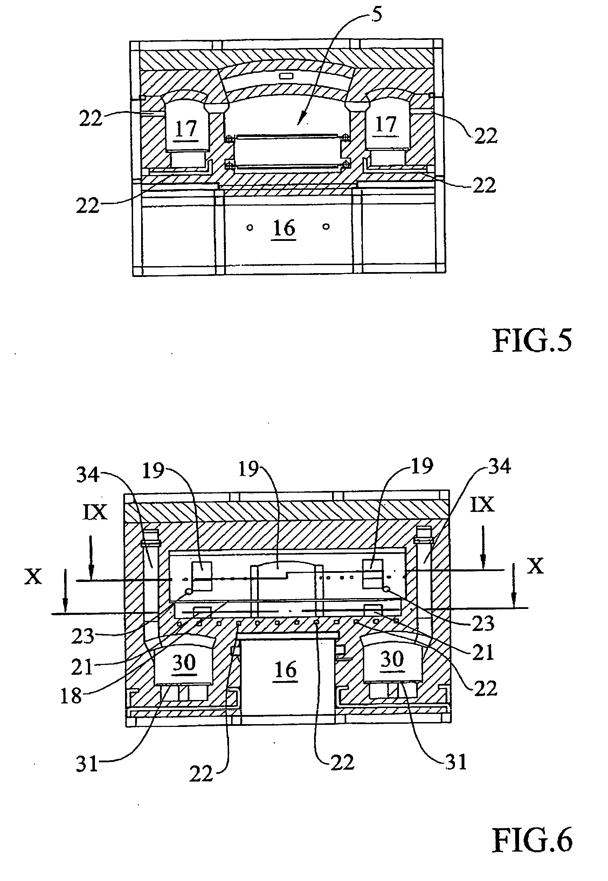

The bottom combustion chamber 16 (Figures 6-8) comprises bottom furnaces 30 having draught chimneys 34 and, in one embodiment, bottom grates 31 onto which to lay combustible firewood (not shown) introducible through bottom openings 32 closed by bottom doors 33.

Slits 22 allow the intake of primary air which supplies oxygen for the combustion of the firewood of the furnaces 17 and 30 ignited by gas burners (not shown) which are introduced and then withdrawn through round holes 23 (Figures 3 and 6).

Additional slits 24 allow the passage of secondary air pushed by fans 50 (Figure 1) controlled by a control unit (not shown) which processes data coming from sensors of temperature and smoke 26.

Channels 27 (Figure 4) allow the communication between the top furnaces 17 and the bottom ones 30, while openings 28 allow the communication between the top furnaces 17 and the baking surface 5.

As for what concerns the operation, in the first place the oven is brought to the temperature for the baking of the pizza by inletting primary air through the slits 22 and by igniting the furnaces 17 and 30 through the gas burners.

Once the chain 8 has been started by means of the motor unit 9, the pizza pies are laid one after the other on the baking surface 5 at the inlet mouth 40. The furnaces 17 determine the baking of the pizza pies.

The composition of the air and the temperature inside the oven are continuously monitored. The sensors 26 detect values which are sent to the control unit which compares them with reference values.

If the temperature inside the oven drops below a predefined limit, the control unit controls the charging of additional firewood that takes place manually. In addition the control unit is capable to establish where the firewood must be added. The door 20, 33 in which the charging of firewood must be done is in fact signalled to the worker.

If the sensors detect an excessive amount of smoke, the control unit orders the fans 50 the intake of secondary air through the slits 24, of which approximately 25% oxidizes the excess smoke which can blacken the pizza pies and produce incombustibles.

This monitoring system allows therefore to keep the baking conditions of the oven constant, thus guaranteeing a good quality of the pizza pies picked up at the outlet mouth 41 of the oven.

The length of the tunnel 4 is variable. The modular structure easily allows even in a second time to lengthen or shorten the oven according to the needs.

In a particular embodiment not shown in figures, said industrial wood burning oven can have a double heating mode, firewood and gas heating. As compared with the oven above described, the bottom combustion chamber can be heated with gas instead of firewood. The bottom combustion chamber is in fact used to heat the bearing structure of the oven and to maintain the refractory plates 6 in temperature along the distance back from the outlet to the inlet of the oven, whereas the top combustion chamber heats directly the baking surface.

The positive effects of the wood burning oven for the baking of pizza would therefore be maintained, while taking advantage of a gas heated bottom combustion chamberthere would be lower servicing costs and less amount of smoke.

## Claims

1. Industrial firewood oven with tunnel for the baking of pizza or similar alimentary products, made up of a bearing structure (10) in refractory material comprising an inlet mouth (40) and an outlet mouth (41) connected by a passing through tunnel (4) along which a mobile baking surface (5) made of refractory plates (6) supporting pizza or similar alimentary products slides, **characterised in that** it comprises:
- a top combustion chamber (15), housing top furnaces (17) having top grates (18) supporting combustible firewood, which heats directly the baking surface (5);
- a bottom combustion chamber (16), housing bottom furnaces (30), which is used to heat the bearing structure of the oven and to maintain the refractory plates (6) in temperature along the distance back from the outlet to the inlet of the oven;
- slits (22) for the passage of primary air for the combustion of the firewood;
- slits (24) for the passage of secondary air for the oxidation of the excess smoke;
said primary and secondary air being moved by fans (50) controlled by a control unit which processes data on the composition of the air detected inside the oven by sensors (26).

2. Industrial oven according to claim 1, **characterised in that** said bottom combustion chamber comprises bottom grates (31) that support combustible firewood.

3. Industrial oven according to claim 1, **characterised in that** said bottom combustion chamber is heated with gas.

4. Oven according to any claim 1-3, **characterised in that** the percentage of secondary air which oxidizes the excess smoke is equal to approximately 25% of the air intaken into the oven.

5. Oven according to any claim 1-3, **characterised in that** said top furnaces (17) are reachable through top openings (19) closed by top doors (20) whereas said bottom furnaces (30) are reachable through bottom openings (32) closed by bottom doors (33).

6. Industrial oven according to claim 5, **characterised in that** it comprises additional top openings (21) for the cleaning of top of the furnaces (17).

7. Oven according to any claim 1-6, **characterised in that** said bottom combustion chamber (16) comprises draught chimneys (34).

8. Oven according to any claim 1-7, **characterised in that** said mobile baking surface (5) consists in a series of adjacent refractory plates (6) mounted on steel brackets (7) whose ends are fastened to transport chains (8) controlled by a motor unit (9).

9. Oven according to claim 8, **characterised in that** said motor unit (9) consists in a driving shaft (11) which through a transmission controls a driven shaft (12) onto which a crown gear (13) is fastened which is engaged with the transport chain (8).

10. Oven according to any claim 1-9, **characterised in that** said baking surface (5) consists in a conveyor belt.

11. Oven according to any claim 1-10, **characterised in that** it comprises holes (23) for the passage of ignition means for the ignition of the furnaces (17,30).

12. Oven according to claim 11, **characterised in that** said ignition means consist in gas burners.

13. Oven according to any claim 1-12, **characterised in that** channels (27) allow the communication between top (17) and bottom (30) furnaces.

14. Oven according to any claim 1-13, **characterised in that** openings (28) allow the communication between top furnaces (17) and the baking surface (5).

15. Oven according to any claim 1-14, **characterised in that** said bearing structure (10) is made up of an inlet module (1), an output module (3) and at least an intermediate module (2).

16. Process for the baking of pizza or similar alimentary products, **characterised in that** it provides the passage of the pizza pies or similar alimentary products through a tunnel type wood burning oven according to any claim 1-15.

17. Process according to claim 16, **characterised in that** said passage through the tunnel type wood burning oven takes place in presence of smoke control by means of intake of secondary air controlled as a function of the composition of the air inside the oven.

18. Process according to claim 16 or 17, **characterised in that** at the beginning of the operation, the oven is brought to the temperature for the baking of pizza by inletting primary air through the slits (22) and by igniting the top and bottom furnaces (17,30) through the gas burners.

19. Process according to any claim 16-18, **characterised in that** the firewood is charged manually using the openings indicated by the control system of the oven in order to maintain constant the baking conditions.

## Patentansprüche

1. Industrieller Feuerholzofen mit Tunnel für das Backen von Pizza oder ähnlichen Nahrungsprodukten, ausgebildet aus einer Tragstruktur (10) in feuerfestem Material, umfassend eine Einlassöffnung (40) und eine Auslassöffnung (41), verbunden durch einen Passierdurchgangstunnel (4), entlang dem eine mobile Backfläche (5), ausgebildet aus feuerfesten Platten (6), tragend Pizza oder ähnliche Nahrungsmittelprodukte, fährt, **dadurch gekennzeichnet, dass** er folgendes umfasst:
- eine obere Verbrennungskammer (15), aufnehmend obere Öfen (17), aufweisend obere Gitter (18), tragend brennbares Feuerholz, welches direkt die Backfläche (5) heizt;
- eine untere Brennkammer (16), aufnehmend untere Öfen (30), die verwendet wird, um die Tragstruktur des Ofens zu heizen und um die feuerfesten Platten (6) auf Temperatur zu halten entlang der Strecke zurück von dem Auslass zu dem Einlass des Ofen;
- Schlitze (22) für die Passage von Primärluft für die Verbrennung des Feuerholzes;
- Schlitze (24) für die Passage von Sekundärluft für die Oxidation des überschüssigen Rauchs;
wobei die Primär- und Sekundärluft mittels Flügeln (50) bewegt wird, gesteuert durch eine Steuereinheit, welche Daten verarbeitet in Bezug auf die Komposition der Luft, detektiert im innern des Ofens durch Sensoren (26).

2. Industrieller Ofen gemäß Anspruch 1, **dadurch gekennzeichnet, dass** die untere Verbrennungskammer untere Gitter (31) umfasst, die brennbares Feuerholz tragen.

3. Industrieller Ofen gemäß Anspruch 1, **dadurch gekennzeichnet, dass** die untere Verbrennungskammer mit Gas heizt.

4. Ofen gemäß einem der Ansprüche 1 bis 3, **dadurch gekennzeichnet, dass** der Prozentsatz der Sekundärluft, die den überschüssigen Rauch oxidiert, gleich ungefähr 25 % der in den Ofen eingebrachten Luft ist.

5. Ofen gemäß einem der Ansprüche 1 bis 3, **dadurch gekennzeichnet, dass** die oberen Öfen (17) durch obere Öffnungen (19) erreichbar sind, geschlossen durch obere Türen (20), wohingegen die unteren Öfen (30) erreichbar sind durch untere Öffnungen (32), geschlossen durch untere Türen (33).

6. Industrieller Ofen gemäß Anspruch 5, **dadurch gekennzeichnet, dass** er zusätzliche obere Öffnungen (21) für das Reinigen des Oberen der Öfen (17) umfasst.

7. Ofen gemäß einem der Ansprüche 1 bis 6, **dadurch gekennzeichnet, dass** die untere Verbrennungskammer (16) Durchzugskamine (34) umfasst.

8. Ofen gemäß einem der Ansprüche 1 bis 7, **dadurch gekennzeichnet, dass** die mobile Backfläche (5) aus einer Reihe benachbarter feuerfester Platten (6) besteht, montiert an Stahltragteilen (7), deren Enden befestigt sind an Transportketten (8), gesteuert durch eine Motoreinheit (9).

9. Ofen gemäß Anspruch 8, **dadurch gekennzeichnet, dass** die Motoreinheit (9) aus einem treibenden Schaft (11) besteht, der durch eine Transmission einen angetriebenen Schaft (12) steuert, an dem ein Zahnkranz (13) befestigt ist, der in Eingriff steht mit der Transportkette (8)

10. Ofen gemäß einem der Ansprüche 1 bis 9, **dadurch gekennzeichnet, dass** die Backfläche (5) aus einem Förderband besteht.

11. Ofen gemäß einem der Ansprüche 1 bis 10, **dadurch gekennzeichnet, dass** er Löcher (23) für die Passage von Zündmitteln für die Zündung der Öfen (17, 30) umfasst.

12. Ofen gemäß Anspruch 11, **dadurch gekennzeichnet, dass** die Zündmittel aus Gasbrennern bestehen.

13. Ofen gemäß einem der Ansprüche 1 bis 12, **dadurch gekennzeichnet, dass** Kanäle (27) die Kommunikation zwischen oberen (17) und unteren (30) Öfen ermöglichen.

14. Ofen gemäß einem der Ansprüche 1 bis 13, **dadurch gekennzeichnet, dass** Öffnungen (28) die Kommunikation zwischen oberen Öfen (17) und der Backfläche (5) ermöglichen.

15. Ofen gemäß einem der Anspruche 1 bis 14, **dadurch gekennzeichnet, dass** die Tragstruktur (10) ausgebildet ist aus einem Einlassmodul (1), einem Auslassmodul (3) und zumindest einem Zwischenmodul (2).

16. Verfahren für das Backen von Pizza oder ähnlichen Nahrungsprodukten, **dadurch gekennzeichnet, dass** es die Passage der Pizzateile oder ähnlicher Nahrungsprodukte durch einen tunnelartigen Holzbrennofen gemäß einem der Ansprüche 1 bis 15 vorsieht.

17. Verfahren gemäß Anspruch 16, **dadurch gekennzeichnet, dass** die Passage durch den tunnelartigen Holzbrennofen stattfindet in Gegenwart einer Rauchsteuerung mittels Aufnahme von Sekundärluft, gesteuert als Funktion der Komposition der Luft im Innern des Ofens.

18. Verfahren gemäß Anspruch 16 oder 17, **dadurch gekennzeichnet, dass** am Anfang des Betriebs der Ofen auf die Temperatur gebracht wird für das Backen von Pizza durch Einlass von Primärluft durch die Schlitze (22) und durch Zündung der oberen und unteren Öfen (17, 30) durch die Gasbrenner.

19. Verfahren gemäß einem der Ansprüche 16 bis 18, **dadurch gekennzeichnet, dass** das Feuerholz manuell geladen wird unter Verwendung der Öffnungen, angezeigt durch das Steuersystem des Ofens, um die Backbedingungen konstant zu halten.

## Revendications

1. Four à bois industriel avec tunnel pour la cuisson de pizzas ou de produits alimentaires similaires, constitué par une structure de support (10) en matériau réfractaire comprenant une bouche d'entrée (40) et une bouche de sortie (41) reliées par un tunnel de passage traversant (4) le long duquel coulisse une surface de cuisson mobile (5) faite de plaques réfractaires (6) supportant des pizzas ou des produits alimentaires similaires, **caractérisé en ce qu'**il comprend :
- une chambre de combustion supérieure (15), renfermant des fourneaux supérieurs (17) comportant des grilles supérieures (18) supportant du bois de chauffage combustible, qui chauffe directement la surface de cuisson (5) ;
- une chambre de combustion inférieure (16), renfermant des fourneaux inférieurs (30), qui est utilisée pour chauffer la structure de support du four et pour maintenir les plaques réfractaires (6) en température le long de la distance de retour de la sortie à l'entrée du four ;
- des fentes (22) pour le passage d'air primaire pour la combustion du bois de chauffage ;
- des fentes (24) pour le passage d'air secondaire pour l'oxydation de l'excès de fumée ;
lesdits airs primaire et secondaire étant déplacés par des ventilateurs (50) commandés par une unité de commande qui traite des données concernant la composition de l'air détecté à l'intérieur du four par des capteurs (26).

2. Four industriel selon la revendication 1, **caractérisé en ce que** ladite chambre de combustion inférieure comprend des grilles inférieures (31) qui supportent du bois de chauffage combustible.

3. Four industriel selon la revendication 1, **caractérisé en ce que** ladite chambre de combustion inférieure est chauffée au gaz.

4. Four selon l'une quelconque des revendications 1 à 3, **caractérisé en ce que** le pourcentage d'air secondaire qui oxyde l'excès de fumée est égal à approximativement 25% de l'air admis dans le four.

5. Four selon l'une quelconque des revendications 1 à 3, **caractérisé en ce que** lesdits fourneaux supérieurs (17) peuvent être atteints à travers des ouvertures supérieures (19) fermées par des portes supérieures (20), tandis que lesdits fourneaux inférieurs (30) peuvent être atteints à travers des ouvertures inférieures (32) fermées par des portes inférieures (33).

6. Four industriel selon la revendication 5, **caractérisé en ce qu'**il comprend des ouvertures supérieures additionnelles (21) pour le nettoyage du sommet des fourneaux (17).

7. Four selon l'une quelconque des revendications 1 à 6, **caractérisé en ce que** ladite chambre de combustion inférieure (16) comprend des cheminées de tirage (34).

8. Four selon l'une quelconque des revendications 1 à 7, **caractérisé en ce que** ladite surface de cuisson mobile (5) est constituée par une série de plaques réfractaires adjacentes (6) montées sur des étriers en acier (7) dont les extrémités sont fixées à des chaînes de transport (8) commandées par une unité de moteur (9).

9. Four selon la revendication 8, **caractérisé en ce que** ladite unité de moteur (9) est constituée par un arbre d'entraînement (11), qui, par l'intermédiaire d'une transmission, commande un arbre entraîné (12) sur lequel est fixée une couronne dentée (13) qui vient en prise avec la chaîne de transport (8).

10. Four selon l'une quelconque des revendications 1 à 9, **caractérisé en ce que** ladite surface de cuisson (5) est constituée par une courroie convoyeuse.

11. Four selon l'une quelconque des revendications 1 à 10, **caractérisé en ce qu'**il comprend des trous (23) pour le passage de moyens d'allumage pour l'allumage des fourneaux (17, 30).

12. Four selon la revendication 11, **caractérisé en ce que** lesdits moyens d'allumage sont constitués par des brûleurs à gaz.

13. Four selon l'une quelconque des revendications 1 à 12, **caractérisé en ce que** des canaux (27) permettent la communication entre les fourneaux supérieurs (17) et inférieurs (30).

14. Four selon l'une quelconque des revendications 1 à 13, **caractérisé en ce que** des ouvertures (28) permettent la communication entre les fourneaux supérieurs (17) et la surface de cuisson (5).

15. Four selon l'une quelconque des revendications 1 à 14, **caractérisé en ce que** ladite structure de support (10) est constituée par un module d'entrée (1), un module de sortie (3) et au moins un module intermédiaire (2).

16. Procédé pour la cuisson de pizzas ou de produits alimentaires similaires, **caractérisé en ce qu'**il effectue le passage de préparations de pizza ou de produits alimentaires similaires à travers un four brûlant du bois du type tunnel selon l'une quelconque des revendications 1 à 15.

17. Procédé selon la revendication 16, **caractérisé en ce que** ledit passage à travers le four brûlant du bois du type tunnel se produit en présence d'une régulation de fumées à l'aide d'une admission d'air secondaire commandée en fonction de la composition de l'air à l'intérieur du four.

18. Procédé selon la revendication 16 ou 17, **caractérisé en ce que**, au commencement du fonctionnement, le four est amené à la température pour la cuisson de pizzas par le fait de faire entrer de l'air primaire à travers les fentes (22) et par l'allumage des fourneaux supérieurs et inférieurs (17, 30) à l'aide des brûleurs à gaz.

19. Procédé selon l'une quelconque des revendications 16 à 18, **caractérisé en ce que** le bois de chauffage est chargé manuellement à l'aide des ouvertures indiquées par le système de commande du four afin de maintenir constantes les conditions de cuisson.
